# EUROPÄISCHE PATENTANMELDUNG

(11) **EP 3 763 762 A1**
(43) Veröffentlichungstag der Anmeldung: **13.01.2021**
(21) Anmeldenummer: 19185842.2
(22) Anmeldetag: 11.07.2019
(51) Int. Cl.: C08G 18/42, C08G 18/79, C08G 18/28, C09D 175/06, C08G 18/20

(54) **POLYURETDION-PULVERLACK**

(71) Anmelder: Covestro Intellectual Property GmbH & Co. KG, 51373 Leverkusen (DE)
(72) Erfinder: Laas, Hans-Josef, 51519 Odenthal (DE); Latorre Martinez, Irene Cristina, 51373 Leverkusen (DE); Grahl, Michael, 51371 Leverkusen (DE); Pires, Raul, 50670 Köln (DE)
(74) Vertreter: Levpat

(57) **Zusammenfassung**

Die Erfindung betrifft einen Polyurethan-Pulverlack, die Verwendung eines solchen Polyurethan-Pulverlacks, ein Verfahren zur Herstellung einer Beschichtung und beschichtete Substrate.

## Beschreibung

Unter dem Druck einer immer strengeren Umweltgesetzgebung gewann in den letzten Jahren die Entwicklung von Pulverlacken neben high-solids-Lacken und wässrigen Beschichtungssystemen zunehmend an Bedeutung. Pulverlacke setzen bei der Applikation keinerlei schädliche Lösemittel frei, lassen sich mit sehr hohem Materialausnutzungsgrad verarbeiten und gelten daher als besonders umweltfreundlich und wirtschaftlich.

Qualitativ besonders hochwertige, licht- und wetterbeständige Beschichtungen lassen sich mit hitzehärtbaren Pulverlacken auf Polyurethanbasis herstellen. Die heute im Markt etablierten Polyurethan-(PUR)-Pulverlacke bestehen im allgemeinen aus festen Polyesterpolyolen, die mit festen blockierten aliphatischen oder meist cycloaliphatischen Polyisocyanaten ausgehärtet werden. Diese Systeme weisen allerdings den Nachteil auf, dass bei der thermischen Vernetzung die als Blockierungsmittel eingesetzten Verbindungen abgespalten werden und überwiegend entweichen. Deshalb müssen bei ihrer Verarbeitung aus apparativen Gründen sowie aus Gründen der Ökologie und Arbeitshygiene besondere Vorkehrungen zur Reinigung der Abluft und/oder Wiedergewinnung des Blockierungsmittels getroffen werden.

Eine Möglichkeit, die Emission von Blockierungsmitteln zu umgehen, stellen die bekannten Uretdiongruppen aufweisenden PUR-Pulverlackvernetzer dar (z. B. DE-A 2 312 391, DE-A 2 420 475, EP-A 0 045 994, EP-A 0 045 996, EP-A 0 045 998, EP-A 0 639 598 oder EP-A 0 669 353). Als Vernetzungsprinzip wird bei diesen Produkten die thermische Rückspaltung von Uretdiongruppen in freie Isocyanatgruppen und deren Reaktion mit dem hydroxyfunktionellen Bindemittel genutzt. In der Praxis finden Uretdionpulverlackvernetzer bis heute allerdings nur wenig Verwendung. Die Ursache hierfür liegt in der vergleichsweise geringen Reaktivität der intern blockierten Isocyanatgruppen, die in der Regel Einbrenntemperaturen von mindestens 160°C erforderlich macht.

Obwohl bekannt ist, dass die Aufspaltung von Uretdiongruppen insbesondere in Gegenwart hydroxylgruppenhaltiger Reaktionspartner bereits ab etwa 100°C merklich einsetzt, verläuft die Reaktion in diesem Temperaturbereich noch derart langsam, dass zur vollständigen Aushärtung von Lackfilmen für einen praktischen Einsatz unrealistisch lange Zeiten von mehreren Stunden benötigt werden. Zwar werden in der DE-A 2 420 475, der DE-A 2 502 934 oder EP-A 0 639 598 als mögliche Einbrennbedingungen für uretdiongruppenhaltige Pulverlacksysteme bereits Temperaturen ab 110°C, in der DE-A 2 312 391 sogar Temperaturen ab 90°C genannt, die konkret beschriebenen Ausführungsbeispiele zeigen allerdings, dass sich auch mit den in diesen Veröffentlichungen beschriebenen Pulverlacken ausreichend vernetzte Beschichtungen unter praxisnahen Einbrennzeiten von maximal 30 min erst ab Temperaturen von 150 bis 160°C erhalten lassen. Auf welche Weise man Pulverlacke bereitstellen kann, die tatsächlich bereits bei Temperaturen unterhalb von 150°C bis 160°C in gewerblich nutzbarem Umfang vollständig ausgehärtet werden können, wird in diesen Publikationen nicht offenbart.

Es hat nicht an Versuchen gefehlt, die Aushärtung von uretdionvernetzenden PUR-Pulverlacken durch Mitverwendung geeigneter Katalysatoren zu beschleunigen. Zu diesem Zweck wurden bereits unterschiedliche Verbindungen vorgeschlagen, beispielsweise die aus der Polyurethanchemie bekannten metallorganischen Katalysatoren, wie Zinn(II)-acetat, Zinn(II)-octoat, Zinn(II)-ethylcaproat, Zinn(II)-laurat, Dibutylzinndiacetat, Dibutylzinndilaurat, Dibutylzinnmaleat (z.B. EP-A 0 045 994, EP-A 0 045 998, EP-A 0 601 079, WO 91/07452 oder DE-A 2 420 475), Eisen(III)-chlorid, Zinkchlorid, Zink-2-ethylcaproat und Molybdänglykolat, tertiäre Amine, wie Triethylamin, Pyridin, Methylpyridin, Benzyldimethylamin, N,N-Endoethylenpiperazin, N-Methylpiperidin, Pentamethyldiethylentriamin, N,N-Dimethylaminocyclohexan und N,N'-Dimethylpiperazin (z.B. EP-A 0 639 598) oder N,N,N'-trisubstituierte Amidine, insbesondere bicyclische Amidine, wie 1,5-Diazabicyclo[4.3.0]non-5-en (DBN) (z.B. EP-A 0 803 524).

Von diesen Katalysatoren erlauben die genannten bicyclischen Amidine die niedrigsten Einbrenntemperaturen. Sie führen gleichzeitig jedoch zu einer für viele Anwendungsbereiche unakzeptabel hohen Einbrennvergilbung. Aus diesem Grund konnten sich Amidin-katalysierte Uretdionsysteme bisher nicht im Markt durchsetzen.

Nach der Lehre der EP-A 1 137 689 werden Lewissäure-Katalysatoren, wie z.B. die vorstehend genannten Zinn- oder Zinkverbindungen, durch saure Gruppen, wie z.B. Carboxylgruppen, inhibiert. Ihre volle katalytische Aktivität können sie in einem Uretdionpulverlacksystem daher nur entfalten, wenn das eingesetzte hydroxyfunktionelle Bindemittel frei von Carboxylgruppen ist. Aus diesem Grund wird den in dieser Veröffentlichung beschriebenen Pulverlacken, die aus üblichen hydroxyfunktionellen Bindemitteln, Uretdiongruppen enthaltenden Vernetzern und speziellen Lewissäurekatalysatoren bestehen, eine ausreichende Menge eines gegenüber Carboxylgruppen reaktiven Agens, beispielsweise eines Epoxids, zugesetzt, um im Bindemittel gegebenenfalls noch vorhandene Carboxylgruppen möglichst vollständig umzusetzen und so aus dem System zu entfernen. Auf diese Weise läßt sich die Reaktivität der Polyurethanpulver so weit steigern, dass die Aushärtung bereits ab einer Temperatur von ca. 120°C einsetzt, die dabei erhält lichen Lackfilme zeigen aber ein unzureichendes Verlaufsverhalten, was sich in einer starker Oberflächenstruktur und mangelndem Glanz niederschlägt. Zwar werden in der WO 2005/095482 verbesserte Lackrezepturen dieser Art beschrieben, die in Gegenwart von Zink-Katalysatoren bei niedrigen Temperaturen vernetzen und Beschichtungen mit akzeptablem Verlauf liefern, bei diesen ist man allerdings auf die Verwendung sehr spezieller hydroxyfunktioneller Bindemittel mit einem exakt definierten Restgehalt an Säuregruppen angewiesen.

Weitere Katalysatoren, mit denen sich in Abwesenheit von Carboxylgruppen bzw. unter Mitverwendung einer gegenüber Carboxylgruppen reaktiven Verbindung die Einbrenntemperatur von Uretdionpulverlacken erniedrigen lassen, sind beispielsweise die in der EP-A 1 334 987 beschriebenen Ammoniumhydroxide und -fluoride, die in der EP-A 1 475 399 beschriebenen Ammoniumcarboxylate oder die in der EP-A 1 475 400 beschriebenen Metallhydroxide und -alkoholate. Für eine vollständige Vernetzung benötigen derart katalysierte Pulverlacke allerdings immer noch ca. 30 min bei Einbrenntemperaturen von ca. 160°C.

Das Problem der Formulierung hochreaktiver Uretdionpulverlacke, die auch für die Beschichtung temperatursensibler Substrate wie Kunststoff oder Holz geeignet sind, konnte bis heute nicht zufriedenstellend gelöst werden.

Aufgabe der vorliegenden Erfindung war es daher, neue abspalterfreie PUR-Pulverlacke auf Basis gut verfügbarer handelsüblicher Bindemittelkomponenten zur Verfügung zu stellen, die bei sehr niedrigen Einbrenntemperaturen bzw. entsprechend kurzen Einbrennzeiten aushärten und dabei völlig vernetzte Lackfilme ergeben.

Diese Aufgabe konnte nun durch die Bereitstellung der nachfolgend näher beschriebenen Uretdionpulverlacke gelöst werden.

Die vorliegende Erfindung beruht auf der überraschenden Beobachtung, dass abspalterfreie PUR-Pulverlacke, bestehend aus handelsüblichen Uretdionpulverlackvernetzern und hydroxyfunktionellen Bindemitteln in Gegenwart von salzartigen Katalysatoren mit einem Imidazolium- und/oder Imidazolinium-Strukturelement bereits innerhalb kurzer Zeit bei sehr niedrigen Temperaturen zu vollständig vernetzten, lösemittelbeständigen Beschichtungen aushärten.

Gegenstand der vorliegenden Erfindung ist ein Polyurethan-Pulverlack, enthaltend
A) mindestens eine unterhalb von 40°C in fester un d oberhalb von 130°C in flüssiger Form vorliegende hydroxyfunktionelle Bindemittelkomponente mit einer OH-Zahl von 15 bis 200 mg KOH/g, einem zahlenmittleren Molekulargewicht von 400 bis 10000 und einem Gehalt an Carboxylgruppen (berechnet als COOH; Molekulargewicht = 45) von bis zu 2,0 Gew.-%, gegebenenfalls
B) mindestens einen Monoalkohol oder mindestens ein Monoalkoholgemisch, das unterhalb von 23°C in fester und oberhalb von 125°C in flüssiger Form vorliegt,
C) mindestens eine Uretdiongruppen und gegebenenfalls freie Isocyanatgruppen aufweisende Polyadditionsverbindung auf Basis aliphatischer und/oder cycloaliphatischer Diisocyanate,
D) mindestens einen Katalysator, enthaltend ein Strukturelement der allgemeinen Formeln (I) und/oder (II) 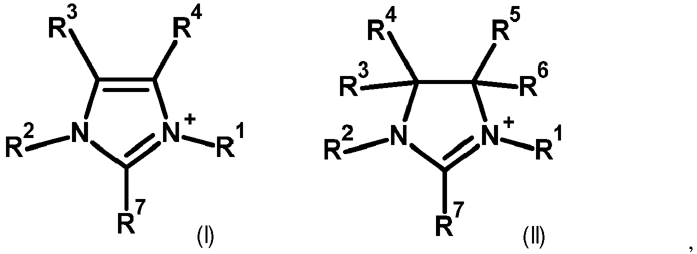 in welchen
   - R¹, R², R³, R⁴, R⁵ und R⁶: unabhängig voneinander für gleiche oder verschiedene Reste stehen, die gesättigte oder ungesättigte, lineare oder verzweigte, aliphatische, cycloaliphatische, araliphatische oder aromatische organische Reste mit 1 bis 18 Kohlenstoffatomen bedeuten, die substituiert oder unsubstituiert sind und/oder Heteroatome in der Kette aufweisen, wobei die Reste auch in Kombination untereinander gegebenenfalls gemeinsam mit einem weiteren Heteroatom Ringe mit 3 bis 8 Kohlenstoffatomen bilden können, die gegebenenfalls weiter substituiert sein können, wobei
   - R³, R⁴, R⁵ und R⁶: unabhängig voneinander auch für Wasserstoff stehen können, und
   - R⁷: für Wasserstoff oder ein Carboxylat-Anion (COO⁻) steht,
   gegebenenfalls
E) mindestens eine gegenüber Carboxylgruppen reaktive Gruppen aufweisende Komponente eines zahlenmittleren Molekulargewichtes von 200 bis 5000,
   und gegebenenfalls
F) weitere aus der Pulverlacktechnologie bekannte Hilfs- und Zusatzstoffe,
mit der Maßgabe, dass die Komponenten A), B) und C) in solchen Mengenverhältnissen vorliegen, dass auf jede Hydroxylgruppe der Komponenten A) und B) 0,8 bis 4,0 Isocyanatgruppen der Komponente C) entfallen, wobei unter Isocyanatgruppen der Komponente C) die Summe aus in dimerer Form als Uretdiongruppen vorliegenden Isocyanatgruppen und freien Isocyanatgruppen verstanden wird, die Komponenten A) und gegebenenfalls E) in solchen Mengenverhältnissen vorliegen, dass auf jede Carboxylgruppe der Komponente A) 0,8 bis 2,0 gegenüber Carboxylgruppen reaktive Gruppe der Komponente E) entfallen, der Anteil der Komponente B) an der Gesamtmenge der Komponenten A) bis F) gegebenenfalls bis 10 Gew.-% und der Anteil der Komponente D) an der Gesamtmenge der Komponenten A) bis F) 0,05 bis 5 Gew.-% beträgt.

Gegenstand der Erfindung ist auch die Verwendung dieses Pulverlackes zur Beschichtung beliebiger hitzeresistenter Substrate, also solchen, die sich bei den Einbrenntemperaturen nicht unerwünscht physikalisch (mechanische Eigenschaften) oder geometrisch (Form) verändern.

Erfindungsgemäß bedeuten die Bezugnahmen auf "umfassend", "enthaltend" usw. bevorzugt "im Wesentlichen bestehend aus" und ganz besonders bevorzugt "bestehend aus". Die in den Patentansprüchen und in der Beschreibung genannten weiteren Ausführungsformen können beliebig kombiniert werden, sofern sich aus dem Kontext nicht eindeutig das Gegenteil ergibt.

Die erfindungsgemäßen Pulverlacke enthalten als Komponente A) eine hydroxyfunktionelle Bindemittelkomponente, die unterhalb von 40°C in fester und oberhalb 130°C in flüssiger Form vorliegt und aus mindestens einem polymeren Polyol besteht.

Hierbei handelt es sich um beliebige aus der Pulverlacktechnologie bekannte Hydroxylgruppen aufweisende Bindemittel mit einer OH-Zahl von 15 bis 200 mg KOH/g, vorzugsweise von 25 bis 150 mg KOH/g, die ein mittleres (aus der Funktionalität und dem Hydroxylgehalt berechenbares) Molekulargewicht von 400 bis 10000, vorzugsweise von 1000 bis 5000 aufweisen und bis zu 2,0 Gew.-%, vorzugsweise bis zu 1,6 Gew.-%, besonders bevorzugt bis zu 1,2 Gew.-% an Carboxylgruppen (berechnet als COOH; Molekulargewicht = 45) enthalten können.

Geeignete Bindemittel sind beispielsweise hydroxylgruppenhaltige Polyester, Polyacrylate oder Polyurethane, wie sie z. B. in der EP-A 0 0 45 998 oder der EP-A 0 254 152 als Pulverlackbindemittel exemplarisch beschrieben sind, die auch in beliebiger Mischung untereinander eingesetzt werden können.

Bevorzugt handelt es sich bei der Polyolkomponente A) um hydroxylgruppenhaltige Polyester der genannten Art oder um beliebige Mischungen solcher Polyesterpolyole. In einer ersten bevorzugten Ausführungsform enthält die Komponente A) mindestens einen Hydroxylgruppen aufweisenden Polyester mit einer OH-Zahl von 25 bis 200 und einem zahlenmittleren Molekulargewicht von 1000 bis 5000 enthält und besteht bevorzugt daraus.

Ergänzend oder alternativ ist es bevorzugt, dass diese Polyesterpolyole amorph sein können und Erweichungstemperaturen (Tg) aufweisen, die - bestimmt nach der Differential-Thermoanalyse (DTA) gemäß DIN 51007:2019-04 - innerhalb des Temperaturbereiches von 40 bis 120°C, besonders bevorzugt innerhalb des Temperaturbereiches von 45 bis 110°C, liegen, oder auch semikristallin sein können und Schmelzpunkte (nach DTA gemäß DIN 51007:2019-04) im Bereich von 40 bis 130°C, besonders bevorzugt im Bereich von 50 bis 100°C, besitzen.

Als Polyolkomponente A) bevorzugt eingesetzte amorphe Polyesterpolyole sind beispielsweise solche, wie sie in der WO 91/07452 auf Seite 8, Zeile 3 bis 29 beispielhaft beschrieben sind. Bevorzugt eingesetzte semikristalline Polyesterpolyole sind ebenfalls bekannt und beispielsweise in der WO 91/07452 von Seite 8, Zeile 30 bis Seite 11, Zeile 25 oder der WO 2005/105879 von Seite 11, Zeile 6 bis Seite 12, Zeile 7 beschrieben.

Zur Verbesserung der Verlaufseigenschaften können die erfindungsgemäßen Pulverlacke gegebenenfalls Monoalkohole oder Monoalkoholgemische B), die unterhalb von 23°C in fester und oberhalb von 125°C in flüssiger Form vor liegen, enthalten.

Hierbei handelt es sich um beliebige gesättigte oder ungesättigte einwertige Alkohole, die aliphatisch, cycloaliphatisch oder aromatisch gebundene Hydroxylgruppen tragen und gegebenenfalls bis zu 3 Heteroatome aus der Reihe Sauerstoff, Schwefel, Stickstoff enthalten können. Geeignet sind beispielsweise Monoalkohole des Molekulargewichtsbereiches 100 bis 900, wie z. B. 1-Dodecanol, 1-Tridecanol, 1-Tetradecanol, 1-Pentadecanol, 1-Hexadecanol, 1-Heptadecanol, 1-Octadecanol, (E)-9-Octadecen-1-ol, 1-Nonadecanol, 1-Eicosanol, 1-Heneicosanol, 1-Docosanol, (E)- und (Z)-13-Docosen-1-ol, 1-Tricosanol, 1-Tetracosanol, 1-Pentacosanol, 1-Hexacosanol, 1-Heptacosanol, 1-Octacosanol, 1-Nonacosanol, 1-Triacontanol, 1-Hentriacontanol, 1-Dotriacontanol, 1-Tetratriacontanol, 2- Tetradecyl-octadecanol, 2-Hexadecyl-eicosanol, Cyclohexanol, 1-Methylcyclohexanol-(1), die isomeren Decalole, Cyclopentadecanol, 4-Octylphenol, 4-tert.-Octylphenol, isomere Nonylphenole, 1-Naphthol, 2-Naphthol oder beliebige Gemische solcher Alkohole.

Ebenfalls als Komponenten B) geeignet sind Homologengemische von linearen oder verzweigten Monoalkoholen mit zahlenmittleren Molekulargewichten von 200 bis 750, wie sie beispielsweise nach bekannten Verfahren bei der technischen Synthese als primäre Produkte anfallen, sofern diese einen Schmelz- oder Erweichungsbereich im oben genannten Temperaturintervall aufweisen. Eine umfassende Übersicht über die technischen Verfahren zur Herstellung solcher Monoalkoholgemische findet sich beispielsweise in K. Noweck: "Fatty Alcohols", Ullmann's Encyclopedia of Industrial Chemistry, Electronic Release, 7th ed. Wiley-VCH, Weinheim June 2001, DOI: 10.1002/14356007.a10_277*.* Geeignete homologe Monoalkoholgemische sind beispielsweise nach Ziegler-Verfahren (Alfol- oder Epal-Prozess), durch Hydroformylierung von α-Olefinen, z. B. nach dem SHOP-Prozess ("Shell's Higher Olefin Process"), oder nach verschiedenen oxidativen Verfahren aus Paraffinen, z. B. nach dem Baker Petrolite-Prozess (siehe z. B. US-A 4,426,329), erhältlich.

Bevorzugte Komponenten B) sind gesättigte lineare oder verzweigte aliphatische Monoalkohole mit 12 bis 50 Kohlenstoffatomen, Gemische solcher Monoalkohole oder nach einem der vorstehenden Verfahren hergestellte Homologengemische gesättigter linearer oder verzweigter Monoalkohole, die im statistischen Mittel von 18 bis 50 Kohlenstoffatome aufweisen.

Besonders bevorzugt sind gesättigte linearaliphatische Monoalkohole mit 12 bis 24 Kohlenstoffatomen und primär gebundener Hydroxylgruppe, Gemische solcher primären Monoalkohole oder nach einem der vorstehenden Verfahren hergestellte Homologengemische gesättigter primärer Monoalkohole, die im statistischen Mittel von 23 bis 50 Kohlenstoffatome aufweisen.

In den erfindungsgemäßen Pulverlacken werden die hydroxyfunktionellen Bindemittel A) mit einer gegenüber Hydroxylgruppen reaktiven Vernetzerkomponente C) kombiniert. Hierbei handelt es sich um unterhalb von 40°C in fester und oberhalb von 125°C in flüssiger Form vorliegende Uretdiongruppen und gegebenenfalls freie Isocyanatgruppen aufweisende Polyadditionsverbindungen, vorzugsweise um solche auf Basis aliphatischer, cycloaliphatischer und/oder araliphatischer Diisocyanate, wie sie auf verschiedene Weise, beispielsweise durch Phosgenierung in der Flüssig- oder Gasphase oder auf phosgenfreien Weg, wie z. B. durch thermische Urethanspaltung, zugänglich sind, insbesondere um solche auf Basis von 1,5-Pentamethylendiisocyanat (PDI), 1,6-Hexamethylendiisocyanat (HDI), 1-Isocyanato-3,3,5-trimethyl-5-isocyanatomethylcyclohexan (Isophorondiisocyanat, IPDI), 4,4'- und/oder 4,2'-Diisocyanatodicyclohexylmethan (H₁₂-MDI), 1,3-Diisocyanato-2(4)-methylcyclohexan, Bis-(isocyanatomethyl)-norbornan (NBDI), 1,3- und 1,4-Bis(isocyanatomethyl)benzol (Xylylendiisocyanat, XDI), oder beliebiger Gemische dieser Diisocyanate.

Besonders bevorzugte Diisocyanate zur Herstellung der Uretdiongruppen enthaltenden Vernetzerkomponenten C) sind PDI, HDI, IPDI und H₁₂-MDI.

Die Herstellung solcher Polyadditionsverbindungen durch Umsetzung Uretdiongruppen aufweisender Polyisocyanate mit gegenüber Isocyanatgruppen reaktiven difunktionellen und gegebenenfalls monofunktionellen Verbindungen, insbesondere zweiwertigen und gegebenenfalls einwertigen Alkoholen ist prinzipiell bekannt und wird beispielsweise in DE-A 2 420 475, EP-A 0 045 996, EP-A 0 045 998, EP-A 0 639 598, EP-A 0 669 353, EP-A 1 024 158 oder WO 04/005363 beschrieben. Die als Komponente B) in Betracht kommenden Uretdiongruppen und gegebenenfalls freie Isocyanatgruppen aufweisenden Polyadditionsverbindungen weisen im allgemeinen einen Gehalt an Uretdiongruppen (berechnet als C₂N₂O₂, Molekulargewicht = 84) von 3 bis 19 Gew.-% und einen Gehalt an freien Isocyanatgruppen (berechnet als NCO; Molekulargewicht = 42) von 0 bis 6,0 Gew.-% auf. Der Schmelzpunkt bzw. Schmelzbereich dieser Verbindungen liegt im allgemeinen innerhalb des Temperaturbereiches von 40 bis 125°C.

In einer weiteren bevorzugten Ausführungsform enthält die Komponente C) mindestens eine Uretdiongruppen und gegebenenfalls freie Isocyanatgruppen aufweisende Polyadditionsverbindung mit einem Mindestgehalt an Carbonsäureestergruppen (berechnet als CO₂; Molekulargewicht = 44) und/oder Carbonatgruppen (berechnet als CO₃; Molekulargewicht = 60) von 1 Gew.-% und besteht bevorzugt daraus. Diese besonders bevorzugten Uretdiongruppen aufweisenden Polyadditionsverbindungen sind ebenfalls bereits bekannt. Ihre Herstellung kann beispielsweise wie in EP-A 0 639 598, EP-A 1 024 158, EP-B 1 063 251 oder WO 04/005363 beschrieben erfolgen.

Die Komponente Komponenten A), B) und C) werden in dem erfindungsgemäßen Pulverlack in solchen Mengen eingesetzt, dass auf jede Hydroxylgruppe der Komponenten A) und B) 0,8 bis 4,0, vorzugsweise 1,0 bis 3,0, besonders bevorzugt 1,2 bis 2,0 Isocyanatgruppen der Komponente C) entfallen, wobei unter Isocyanatgruppen der Komponente C) die Summe aus in dimerer Form als Uretdiongruppen vorliegenden Isocyanatgruppen und freien Isocyanatgruppen verstanden wird und der Anteil der Komponente B) an der Gesamtmenge der Komponenten A) bis F) gegebenenfalls bis 10 Gew.-%, vorzugsweise bis 8 Gew.-%, besonders bevorzugt bis 7 Gew.-% beträgt. Für den Fall der Mitverwendung der Komponente B) beträgt deren Anteil an der Gesamtmenge der Komponenten A) bis F) vorzugsweise 0,1 bis 10 Gew.-%, besonders bevorzugt 0,1 bis 8 Gew.-% und ganz besonders bevorzugt 0,1 bis 7 Gew.-%.

Zur Beschleunigung der Aushärtung enthalten die erfindungsgemäßen Pulverlacke mindestens einen, die Umsetzung von Uretdiongruppen mit Hydroxylgruppen beschleunigenden salzartigen Katalysator D) mit einem Imidazolium- und/oder Imidazolinium-Strukturelement.

Als Katalysatoren D) geeignete Verbindungen sind als ionische Flüssigkeiten vom Imidazolium- und Imidazoliniumtyp bekannt und werden beispielsweise als Lösemittel in der chemischen Synthese eingesetzt. Verfahren zu ihrer Herstellung sind beispielsweise in Chem. Rev. 99, 8, 2071-2084 und WO 2005/070896, beschrieben.

Bei den Katalysatoren D) handelt es sich um salzartige Verbindungen, enthaltend ein Strukturelement der allgemeinen Formeln (I) oder (II) 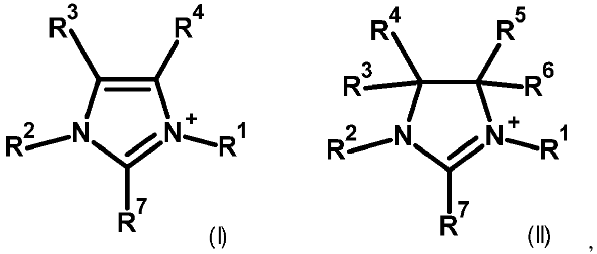 in welchen
- R¹, R², R³, R⁴, R⁵ und R⁶: unabhängig voneinander für gleiche oder verschiedene Reste stehen, die gesättigte oder ungesättigte, lineare oder verzweigte, aliphatische, cycloaliphatische, araliphatische oder aromatische organische Reste mit 1 bis 18 Kohlenstoffatomen bedeuten, die substituiert oder unsubstituiert sind und/oder Heteroatome in der Kette aufweisen, wobei die Reste auch in Kombination untereinander gegebenenfalls gemeinsam mit einem weiteren Heteroatom Ringe mit 3 bis 8 Kohlenstoffatomen bilden können, die gegebenenfalls weiter substituiert sein können,
- R³, R⁴, R⁵ und R⁶: unabhängig voneinander auch für Wasserstoff stehen können, und
- R⁷: für Wasserstoff oder ein Carboxylat-Anion (COO⁻) steht.

Bevorzugte Katalysatoren D) sind salzartige Verbindungen, enthaltend ein Strukturelement der allgemeinen Formeln (I) oder (II), in welchen
- R¹ und R²: unabhängig voneinander für gleiche oder verschiedene Reste stehen, die gesättigte oder ungesättigte, lineare oder verzweigte, aliphatische, cycloaliphatische, araliphatische oder aromatische organische Reste mit 1 bis 12 Kohlenstoffatomen bedeuten, die substituiert oder unsubstituiert sind und/oder Heteroatome in der Kette aufweisen,
- R³, R⁴, R⁵ und R⁶: für Wasserstoff stehen, und wobei
- R⁷: für Wasserstoff oder ein Carboxylat-Anion (COO⁻) steht.

Besonders bevorzugte Katalysatoren D) sind salzartige Verbindungen, enthaltend ein Strukturelement der allgemeinen Formeln (I) oder (II), in welchen
- R¹ und R²: unabhängig voneinander für gleiche oder verschiedene Reste stehen, die gesättigte oder ungesättigte, lineare oder verzweigte, aliphatische organische Reste mit 1 bis 12 Kohlenstoffatomen bedeuten,
- R³, R⁴, R⁵ und R⁶: für Wasserstoff stehen, und
- R⁷: für Wasserstoff oder ein Carboxylat-Anion (COO⁻) steht.

Als geeignete Katalysatoren D) der allgemeinen Formel (I) seien beispielhaft solche genannt, die ein 1,3-Dimethylimidazolium-, 1-Methyl-3-ethylimidazolium-, 1-Methyl-3-propylimidazolium-, 1-Methyl-3-butylimidazolium-, 1-Methyl-3-pentylimidazolium-, 1-Methyl-3-hexylimidazolium-, 1-Methyl-3-octylimidazolium-, 1-Methyl-3-nonylimidazolium-, 1-Methyl-3-decylimidazolium-, 1-Decyl-3-methylimidazolium-, 1-Methyl-3-benzylimidazolium-, 1-Methyl-3-(3-phenylpropyl)imidazolium-, 1-Ethyl-3-methylimidazolium (EMIM)-, 1-Isopropyl-3-methylimidazolium-, 1-Butyl-3-methylimidazolium (BMIM)-, 1-Hexyl-3-methylimidazolium-, 1-Heptyl-3-methylimidazolium-, 1-(2-Ethyl)hexyl-3-methylimidazolium (OMIM)-, 1,3-Bis(tert-butyl)-imidazolium-, 1,3-Bis(2,4,6-trimethylphenyl)imidazolium- oder 1,3-Dimethylbenzimidazolium-Kation enthalten.

Als geeignete Katalysatoren D) der allgemeinen Formel (II) seien beispielhaft solche genannt, die ein 1,3-Dimethylimidazolinium-, 1-Ethyl-3-methylimidazolinium-, 1-Butyl-3-methylimidazolium- 1,3-Bis-(2,6-diisopropylphenyl)imidazolinium- oder 1,3-Bis(2,4,6-trimethylphenyl)im idazolinium-1-(1-Adamantyl)-3-(2,4,6-trimethylphenyl) imidazolinium-, 1,3-Diphenyl-4,4,5,5-tetramethylimidazolinium-, 1,3-Di-o-tolyl-4,4,5,5-tetramethylimidazolinium Kation enthalten.

Als Gegenion zu den Imidazolium- und Imidazolinium-Kationen enthalten die in den erfindungsgemäßen Pulverlacken vorliegenden Katalysatoren D) beliebige anorganische und/oder organische Anionen, wie z. B. Halogenid-, Sulfat-, Hydroxysulfat-, Sulfit-, Nitrat-, Carbonat-, Hydrogencarbonat-, Arylsulfonat-, Alkylsulfonat-, Trifluormethylsulfonat-, Alkylsulfat-, Phosphat-, Dialkylphosphat-, Hexafluorophosphat-, Trifluormethylborat-, Tetrafluoroborat-, Bis(trifluoromethylsulfonyl)imid-, Dicyanamid- und/oder Carboxylat-Anionen.

Das Gegenion zu den Imidazolium- und Imidazolinium-Kationen kann daneben auch eine Carboxylatgruppe (COO⁻) darstellen, die als R⁷ der allgemeinen Formel (I) direkt am Imidazolium-Kation gebunden vorliegt, wobei der Katalysator D) in diesem Fall in Form einer zwitterionischen Struktur vorliegt.

Geeignete Katalysatoren D) für die erfindungsgemäßen Pulverlacke sind beispielsweise 1,3-Dimethylimidazoliumchlorid, 1,3-Dimethylimidazolium-2-carboxylat, 1,3-Dimethylimidazoliumdimethylphosphat, 1-Ethyl-3-methylimidazoliumchlorid, 1-Ethyl-3-methylimidazoliumbromid, 1-Ethyl-3-methylimidazoliumiodid, 1-Ethyl-3-methylimidazoliumnitrat, 1-Ethyl-3-methylimidazoliumhydrogencarbonat, 1-Ethyl-3-methylimidazoliummethanesulfonat, 1-Ethyl-3-methylimidazoliumtrifluoromethansulfonat, 1-Ethyl-3-methylimidazoliumtrifluoro(trifluoromethyl)borat, 1-Ethyl-3-methylimidazoliumhydrogensulfat, 1-Ethyl-3-methylimidazoliumethylsulfat, 1-Ethyl-3-methylimidazoliumdicyanamid, 1-Ethyl-3-methylimidazoliumtetrafluoroborat, 1-Ethyl-3-methylimidazoliumdiethylphosphat, 1-Ethyl-3-methylimidazoliumhexafluorophosphat, 1-Ethyl-3-methylimidazolium-bis(trifluoromethansulfonyl)imid, 1-Ethyl-3-methylimidazolium-2-carboxylat, 1-Ethyl-3-methylimidazoliumacetat, 1-Ethyl-3-methylimidazolium-(L)-(+)-lactat, 1-Methyl-3-propylimidazoliumiodid, 1,3-Diisopropyl-4,5-dimethylimidazolium-2-carboxylat, 1-Butyl-3-methylimidazoliumchlorid, 1-Butyl-3-methylimidazoliumbromid, 1-Butyl-3-methylimidazoliumiodid, 1-Butyl-3-methylimidazoliumtrifluoromethansulfonat, 1-Butyl-3-methylimidazoliumethylsulfat, 1-Butyl-3-methylimidazolium-n-octylsulfat, 1-Butyl-3-methylimidazoliumdicyanamid, 1-Butyl-3-methylimidazoliumtrifluoro(trifluoromethyl)borat, 1-Butyl-3-methylimidazoliumtetrafluoroborat, 1-Butyl-3-methylimidazoliumdibutylphosphat, 1-Butyl-3-methylimidazoliumhexafluorophosphat, 1-Butyl-3-methylimidazolium-2-carboxylat, 1-Butyl-3-methylimidazoliumacetat, 1-Butyl-3-methylimidazolium-bis(trifluoromethansulfonyl)imid, Bis(tert-butyl)-imidazolium-2-carboxylat, 1-Hexyl-3-methylimidazoliumchlorid, 1-Hexyl-3-methylimidazoliumbromid, 1-Hexyl-3-methylimidazoliumtetrafluoroborat, 1-Hexyl-3-methylimidazoliumbis(trifluoromethansulfonyl)imid, 1-Hexyl-3-methylimidazoliumhexafluorophosphat, 1-Methyl-3-n-octylimidazoliumbromid, 1-Methyl-3-n-octylimidazoliumchlorid, 1-Methyl-3-n-octylimidazoliumhexafluorophosphat, 1-Decyl-3-methylimidazolium-bis(trifluoromethansulfonyl)imid, 1,3-Dimethylimidazoliniumchlorid, 1,3-Dimethylimidazolinium-2-carboxylat, 1,3-Dimethylimidazoliniumacetat, 1-Ethyl-3-methylimidazoliniumchlorid, 1-Ethyl-3-methylimidazolinium-2-carboxylat, 1-Ethyl-3-methylimidazoliniumacetat, 1-Butyl-3-methylimidazolinium-2-carboxylat, 1,3-Bis-(2,6-diisopropylphenyl)imidazoliniumchlorid oder 1,3-Bis(2,4,6-trimethylphenyl)imidazolinium-1-(1-Adamantyl)-3-(2,4,6-trimethylphenyl)imidazoliniumchlorid und/oder 1,3-Diphenyl-4,4,5,5-tetramethylimidazoliniumchlorid.

Besonders bevorzugte Katalysatoren D) sind Imidazoliumsalze der genannten Art mit Carboxylat-Anionen, ganz besonders bevorzugt 1,3-Dimethylimidazolium-2-carboxylat, 1-Ethyl-3-methylimidazolium-2-carboxylat, 1-Ethyl-3-methylimidazoliumacetat, 1-Butyl-3-methylimidazolium-2-carboxylat und/oder 1-Butyl-3-methylimidazoliumacetat.

Die genannten Katalysatoren D) können, insbesondere wenn es sich um bei Raumtemperatur flüssige Verbindungen handelt, zur leichteren Handhabung und besseren Dosierbarkeit gegebenenfalls auf einer festen Trägersubstanz, beispielsweise einem amorphen Silikat- oder Aluminiumoxidpulver, adsorbiert zum Einsatz kommen.

Die Aushärtekatalysatoren D) kommen in den erfindungsgemäßen Pulverlacken in einer Menge von 0,05 bis 5 Gew.-%, vorzugweise von 0,1 bis 3 Gew.-% bezogen auf die Gesamtmenge der Komponenten A) bis F) zum Einsatz.

Bei der in den erfindungsgemäßen Pulverlacken gegebenenfalls enthaltenen Komponente E) handelt es sich um gegenüber Carboxylgruppen reaktive Gruppen aufweisende Verbindungen eines zahlenmittleren Molekulargewichtes von 200 bis 5000, vorzugsweise von 200 bis 2000, besonders bevorzugt von 250 bis 1000, wie sie in der Pulverlacktechnologie im allgemeinen als Vernetzerkomponenten für carboxylgruppenhaltige Pulverlackbindemittel zum Einsatz kommen.

Geeignete Komponenten E) sind beispielsweise die an sich bekannten Polyepoxide, wie Triglycidylisocyanurat (TGIC) und Triglycidylurazol oder deren Oligomere, Glycidylether, wie z.B. solche auf Basis von Bisphenol A, glycidylfunktionelle Copolymerisate, wie z.B. die bekannten Glycidylmethacrylate (GMA-Harze) aber auch Glycidylester, wie z.B. die der Phthalsäure, Terephthalsäure, Trimellitsäure, Tetrahydro- und Hexahydrophthalsäure, oder beliebige Gemische solcher Polyepoxide.

Geeignete Komponenten E) sind beispielsweise auch β-Hydroxyalkylamidgruppen aufweisende Verbindungen, wie sie in der EP-A 0 322 834 als Vernetzerkomponenten für carboxylgruppenhaltige Polyester beschrieben sind. Die Herstellung solcher β-Hydroxyalkylamide erfolgt im allgemeinen durch basenkatalysierte Umsetzung organischer Polycarbonsäureester mit β-Hydroxyalkylaminen bei Temperaturen bis zu 200°C unter gleichzeitigem destillativen Entfernen des dabei entstehenden Alkohols.

In einer weiteren bevorzugten Ausführungsform ist die Komponente E) mindestens ein Polyepoxid und/oder mindestens ein β-Hydroxyalkylamid.

Bevorzugt kommen in den erfindungsgemäßen Pulverlacken als gegebenenfalls mitzuverwendende Komponente E) Terephthalsäurediglycidylester, Trimellithsäuretriglycidylester, TGIC oder β-Hydroxyalkylamide auf Basis gesättigter Dicarbonsäureester mit 4 bis 12 Kohlenstoffatomen im Dicarbonsäureteil oder beliebige Gemische dieser Verbindungen zum Einsatz. Besonders bevorzugt besteht die Komponente E) aus Gemischen von 70 bis 82 Gew.-% Terephthalsäurediglycidylester und 18 bis 30 Gew.-% Trimellitsäuretriglycidylester.

Falls überhaupt wird die Komponente E) in dem erfindungsgemäßen Pulverlack vorzugsweise in solchen Mengen eingesetzt, dass auf jede Carboxylgruppe der Komponente A) eine mindestens äquimolare Menge an gegenüber Carboxylgruppen reaktiven Gruppen der Komponente E) entfällt. Gegebenenfalls, zum Beispiel bei Verwendung von Polyolkomponenten A) mit besonders niedriger Schmelzviskosität, kann aber auch bereits die Umsetzung mit einer molar unterschüssigen Menge an gegenüber Carboxylgruppen reaktiven Gruppen ausreichen, um die inhibierende Wirkung der Carboxylgruppen aufzuheben, so dass das Verhältnis von Carboxylgruppen zu gegenüber Carboxylgruppen reaktiven Gruppen in den erfindungsgemäßen Pulverlacken von 0,8 bis 2,0, vorzugsweise von 1,0 bis 1,5, besonders bevorzugt von 1,0 bis 1,3 betragen kann.

Gegebenenfalls kann der erfindungsgemäße Pulverlack weitere aus der Pulverlacktechnologie bekannte Hilfs- und Zusatzstoffe F) enthalten.

Hierbei handelt es sich beispielsweise um übliche Polyurethan-Katalysatoren, wie z.B. Aluminium-tri(ethylacetoacetat), Zinn(II)-hexanoat, Zinn(II)-n-octanoat, Zinn(II)-2-ethyl-1-hexanoat, Zinn(II)-ethylcaproat, Zinn(II)-laurat, Zinn(II)-palmitat, Dibutylzinn(IV)-oxid, Dibutylzinn(IV)-dichlorid, Dibutylzinn(IV)-diacetat, Dibutylzinn(IV)-dimaleat, Dibutylzinn(IV)-dilaurat, Dioctylzinn(IV)-diacetat, Molybdänglykolat 1,5-Diazabicyclo[4.3.0]non-5-en oder 1,8-Diazabicyclo[5.4.0]-undec-7-en, oder um beliebige Gemische solcher Katalysatoren.

Eine weitere Klasse gegebenenfalls mitzuverwendender Katalysatoren sind die üblichen literaturbekannten Verbindungen, die geeignet sind, die Reaktion gegebenenfalls in der Komponente A) vorliegender Carboxylgruppen mit den gegenüber Carboxylgruppen reaktiven Gruppen der Komponente E) zu beschleunigen, beispielsweise Ammoniumsalze, wie z.B. Tetrabutylammoniumchlorid, -bromid oder -iodid, Tetraethylammoniumchlorid, - bromid oder -iodid, Trimethylbenzylammoniumchlorid, Dodecyldimethyl-(2-phenoxyethyl)-ammoniumbromid oder Diethyl-(2-hydroxyethyl)-methylammoniumbromid, Phosphoniumsalze, wie z.B. Tetrabutylphosphoniumchlorid, -bromid oder -iodid, Tetraethylphosphoniumchlorid, -bromid oder -iodid, Tetramethylphosphoniumbromid, Octadecyl- tributylphoshoniumbromid, Hexadecyltributylphosphoniumbromid, Katalysatoren mit Imidazolstruktur, wie z.B. Imidazol, 2-Methylimidazol, 2-Methyl-4-ethylimidazol, 2-[(N-Benzylanilino)-methyl]-2-imidazolinphosphat oder 2-Benzyl-2-imidazolinhydrochlorid, oder tert. Amine, wie z. B. N,N-Dimethylcyclohexylamin, N,N-Diethylcyclohexylamin, N-Methylpiperidin, N-Methylmorpholin, Pentamethyldiethylentriamin, N,N'-Dimethylpiperazin oder 1,4-Diazabicyclo[2,2,2]octan.

Bevorzugte gegebenenfalls mitzuverwendende Katalysatoren F) sind Tetralkylammonium- und/oder Tetraalkylphosphoniumsalze, besonders bevorzugt Ammonium- und Phosphoniumsalze der in vorstehendem Absatz genannten Art.

Falls überhaupt, werden diese zusätzlichen Katalysatoren F) in einer Menge bis zu 4 Gew.-%, vorzugsweise bis zu 2,4 Gew.-%, bezogen auf die Gesamtmenge der Komponenten A) bis F) eingesetzt, mit der Maßgabe, dass die Gesamtmenge aller im Pulverlack enthaltenen Katalysatoren D) und gegebenenfalls F) 0,05 bis 5 Gew.-%, vorzugsweise 0,1 bis 3 Gew.-% beträgt, wobei der Anteil der salzartigen, ein Imidazolium- und/oder Imidazolinium-Strukturelement enthaltenden Katalysatoren D) an dieser Gesamtmenge D) und F) mindestens 20 Gew.-% beträgt.

Weitere gegebenenfalls mitzuverwendende Hilfs- und Zusatzstoffe F) sind beispielsweise Verlaufsmittel, wie z.B. Polybutylacrylat oder solche auf Basis von Polysilikonen, Lichtschutzmittel, wie z.B. sterisch gehinderte Amine, UV-Absorber, wie z.B. Benztriazole oder Benzophenone, Pigmente, wie z.B. Titandioxid, oder auch Farbstabilisatoren gegen die Gefahr der Überbrennvergilbung, wie z.B. gegebenenfalls inerte Substituenten aufweisende Trialkyl- und/oder Triarylphosphite, wie Triethylphosphit, Triisodecylphosphit, Triphenylphosphit oder Trisnonylphenylphosphit.

Zur Herstellung des fertigen Pulverlackes werden die Bestandteile A), C), D) und gegebenenfalls B), E) und F) innig miteinander vermischt und anschließend in der Schmelze zu einem homogenen Material vereinigt. Dies kann in geeigneten Aggregaten, beispielsweise beheizbaren Knetern, vorzugsweise jedoch durch Schmelzextrusion erfolgen, wobei die Extrusionstemperatur im allgemeinen so gewählt wird, dass ein Maximum an Scherkräften auf die Mischung einwirkt. Um eine vorzeitige Vernetzung des Pulverlackes zu vermeiden, sollte dabei allerdings eine Temperaturobergrenze von 110°C nicht überschritten werden.

Die Reihenfolge der Vereinigung der Einzelkomponenten A) bis F) ist bei diesem Verfahren weitgehend frei wählbar.

Eine im Sinne der vorliegenden Erfindung ebenfalls bevorzugte Art zur Herstellung eines fertigen Pulverlackes ist es beispielsweise auch, in einem ersten Schritt nur einen Teil der Einzelkomponenten, beispielsweise nur die Komponenten A), B) und D) oder die Komponenten C) und D) oder beispielsweise die Komponenten A), B), D) und E), in Schmelze, vorzugsweise während oder unmittelbar im Anschluss an die Herstellung der Komponenten A) oder C), innig miteinander zu vermischen und erst zu einem späteren Zeitpunkt, in einem zweiten Schritt, zu dem dann resultierenden, aus den Komponenten A), B) und D) oder C) und D) oder den Komponenten A), B), D) und E) bestehenden lagerstabilen homogenen Material die übrigen Komponenten hinzuzufügen und alles gemeinsam zu extrudieren. Es ist darüber hinaus auch möglich, beliebige Konzentrate (Masterbatches) von Rezepturbestandteilen, beispielsweise solche der Monoalkohole B) und/oder der Katalysatoren D) und/oder der Vernetzerkomponenten E) und/oder weiterer Hilfs- und Zusatzstoffe F) in einem Teil der Bindemittelkomponente A), zu formulieren und diese dann bei der Pulverlackherstellung den übrigen Komponenten zu einem erfindungsgemäßen Pulverlack hinzuzufügen.

Unabhängig vom gewählten Verfahren werden die Mengenverhältnisse der Einzelkomponenten A), B), C), D), E) und F) im übrigen so gewählt, dass, wie bereits oben aufgeführt, auf jede Hydroxylgruppe der Komponenten A) und B) 0,8 bis 4,0, vorzugsweise 1,0 bis 3,0, besonders bevorzugt 1,2 bis 2,0 Isocyanatgruppen der Komponente C) entfallen, wobei unter Isocyanatgruppen der Komponente C) die Summe aus in dimerer Form als Uretdiongruppen vorliegenden Isocyanatgruppen und freien Isocyanatgruppen verstanden wird, und auf jede Carboxylgruppe der Komponente A) 0,8 bis 2,0, vorzugsweise 1,0 bis 1,5, besonders bevorzugt 1,0 bis 1,3 gegenüber Carboxylgruppen reaktive Gruppen der Komponente E) entfallen.

Eine besonders bevorzugte Ausführungsform der Erfindung ist ein Pulverlack, bei dem die Komponenten A), B) und C) in solchen Mengenverhältnissen vorliegen, dass auf jede Hydroxylgruppe der Komponenten A) und B) 1,0 bis 3,0 Isocyanatgruppen der Komponente C) entfallen, wobei unter Isocyanatgruppen der Komponente C) die Summe aus in dimerer Form als Uretdiongruppen vorliegenden Isocyanatgruppen und freien Isocyanatgruppen verstanden wird, die Komponenten A) und gegebenenfalls E) in solchen Mengenverhältnissen vorliegen, dass auf jede Carboxylgruppe der Komponente A) 1,0 bis 1,5 gegenüber Carboxylgruppen reaktive Gruppe der Komponente E) entfallen, der Anteil der Komponente B) an der Gesamtmenge der Komponenten A) und B) gegebenenfalls 0,1 bis 7 Gew.-% und der Anteil der Komponente D) an der Gesamtmenge der Komponenten A) bis E) 0,1 bis 3 Gew.-% beträgt.

Die extrudierte Masse wird nach Abkühlen auf Raumtemperatur und nach einer geeigneten Vorzerkleinerung, z.B. durch Zerhacken oder Schroten, zu einem Pulverlack gemahlen und durch Sieben von den Kornanteilen oberhalb der gewünschten Korngröße, beispielsweise oberhalb 0,1 mm, befreit.

Die so hergestellten Pulverlackformulierungen können nach üblichen Pulverauftragsverfahren, wie z.B. elektrostatischem Pulversprühen oder Wirbelsintern, auf die zu überziehenden Substrate aufgebracht werden. Die Härtung der Überzüge erfolgt durch Erhitzen auf Temperaturen von 100 bis 220°C, vorzugsweise jedoch bei für Polyurethanpulverlacke niedrigen Temperaturen von 110 bis 160°C, besonders bevorzugt bei Temperaturen von 120 bis 150 °C, beispielsweise während eines Zeitraums von ca. 5 bis 60 Minuten.

Daher ist ein Verfahren zur Herstellung einer Beschichtung, bei dem ein erfindungsgemäßer Pulverlack durch elektrostatisches Pulversprühen oder Wirbelsintern auf ein Substrat aufgebracht und durch Erhitzen auf Temperaturen von 100 bis 220°C ausgehärtet wird, ein weiterer Gegenstand der vorliegenden Erfindung.

Die erfindungsgemäßen abspalterfreien PUR-Pulverlacke, die salzartige Katalysatoren mit einem Imidazolium- und/oder Imidazolinium-Strukturelement enthalten, liefern bereits bei Einbrenntemperaturen ab 100°C harte, elastische, lö semittel- und chemikalienbeständige Beschichtungen, die sich trotz der niedrigen Einbrenntemperatur durch sehr gute optische Eigenschaften, insbesondere einen sehr guten Verlauf, auszeichnen.

Erfindungsgemäß können beliebige hitzeresistente Substrate, wie beispielsweise solche aus Metallen, Glas, Holz oder temperaturbeständigen Kunststoffen beschichtet werden.

Die nachfolgenden Beispiele dienen zur weiteren Erläuterung der Erfindung.

### Beispiele

Alle Prozentangaben, beziehen sich auf Gewichtsprozente.

Die Bestimmung der NCO-Gehalte erfolgte titrimetrisch nach DIN EN ISO 11909:2007-05.

Die Bestimmung der OH-Zahlen erfolgte titrimetrisch nach DIN EN ISO 4629-2:2015-02, die der Säurezahlen titrimetrisch nach DIN EN ISO 2114:2002-06.

Erweichungstemperaturen (Tg) und Schmelzpunkte wurden mittels Differential-Thermoanalyse (DTA) gemäß DIN 51007:2019-04 bestimmt.

Als Maß für die Aushärtegeschwindigkeit wurden die Gelzeiten der Pulverlacke nach DIN EN ISO 8130-6:2011-02 bei 180°und 200°C bestimmt.

Die Beständigkeit gegenüber Chemikalien wurde mit Hilfe des Aceton-Tests geprüft. Dazu wird ein mit Aceton getränkter Wattebausch in 50 Doppelhüben in einer Spur gleichmäßig über die Beschichtung geführt. Die Bewertung erfolgt nach dem Schulnotenprinzip von 1 (Lackfilm unverändert) bis 5 (Lackfilm aufgelöst).

### Ausaanasverbindunaen

### Hvdroxvfunktionelle Bindemittelkomponente A)

Crylcoat 2845 (Allnex Germany GmbH, Wiesbaden, DE), hydroxyfunktionelles Polyesterharz

| | |
|---|---|
| OH-Zahl: | 35 mg KOH/g |
| Äquivalentgewicht: | 1600 g/val OH |
| Säurezahl: | 8 mg KOH/g |
| Carboxylgruppengehalt: | 0,96 % |
| Glasübergangstemperatur (DTA): | 57 °C |

### Uretdiongruppen aufweisende Polyadditionsverbindung C)

Crelan EF 403 (Covestro Deutschland AG, Leverkusen, DE), cycloaliphatischer Polyuretdion-Pulverlackhärter

| | |
|---|---|
| NCO-Gehalt gesamt: | 13,5 % |
| Äquivalentgewicht: | 310 g/val NCO |
| Schmelzbereich: | ca. 70 - 78 °C |
| Glasübergangstemperatur: | 40 - 55°C |

### Katalysator D1)

70 g 1-Ethyl-3-methylimidazoliumacetat (97 %, Sigma-Aldrich Chemie GmbH, München, DE) wurden gemeinsam mit 100 g Kieselgel 60 (Merck KGaA, Darmstadt, DE) in 150 ml Methylenchlorid bei Raumtemperatur 15 min gerührt. Anschließend wurde das Lösungsmittel mit Hilfe eines Rotationsverdampfers entfernt und der Rückstand 3 Stunden bei 50°C getrocknet. Es lag ein rieselfähig es farbloses Pulver vor. Der Wirkstoffgehalt betrug 41 %.

### Katalysator D2)

1-Ethyl-3-methylimidazolium-2-carboxylat, hergestellt nach dem in Chem. Eur. J. 2016, 22, 16292 - 16303 beschriebenen Verfahren. Farblose Kristalle, Schmelzpunkt ca. 120°C.

### Gegenüber Carboxylgruppen reaktive Komponenten E)

Araldit PT 910 (Huntsman Advanced Materials (Switzerland) GmbH, Basel), Gemisch aus Terephthalsäurediglycidylester (70 bis 82 %) und Trimellitsäuretriglycidylester (18 bis 30 %).

| | |
|---|---|
| Äquivalentgewicht: | 150 g/val Epoxid |

### Beispiel 1 (Vergleich, unkatalysiert)

51,5 Gew.-Teile des hydroxyfunktionellen Polyesterharzes A) wurden gemeinsam mit 10,0 Gew.-Teilen der Uretdiongruppen aufweisenden Polyadditionsverbindung C), entsprechend einem Äquivalentverhältnis von Gesamt-NCO zu OH von 1 : 1, sowie als Hilfs- und Zusatzmittel F) mit 3,0 Gew.-Teilen eines handelsüblichen Verlaufsmittels (Additol P 896, DSM Fine Chemicals, Sittard, NL), 0,5 Gew.-Teilen Benzoin und 30,0 Gew.-Teilen eines Weißpigmentes (Kronos® 2160, Fa. Kronos Titan, Leverkusen, DE) in einem Mixaco-Mischer 5 min bei 2000 UpM gründlich vorgemischt und anschließend mit Hilfe eines zweiwelligen Extruders bei einer Temperatur von 105°C (Zone 1) und 115°C (Zone 2)und einer Wellendrehzahl von 250 UpM extrusiert. Das erstarrten Pulverlackextrudat wurde in einem Moulinex-Küchenmixer zerkleinert und anschließend in einer Retsch-Mühle mit Siebeinsatz bei 10000 UpM feingemahlen. Grobkornanteile über 150 µm wurden mit einem Sieb entfernt.

Die Gelzeit des Lacks betrug bei 180°C 240 s, bei 2 00°C 160 s.

### Beispiel 2 (Vergleich, katalysiert gemäß WO 2005/095482)

Nach dem in Beispiel 1 beschriebenen Verfahren wurde ausgehend von 44,4 Gew.-Teile des hydroxyfunktionellen Polyesterharzes A), 14,6 Gew.-Teilen der Uretdiongruppen aufweisenden Polyadditionsverbindung C), 1,0 Gew.-Teilen K-KAT XK 602 (Zinkacetylacetonat, King Industries, Waddinxveen, NL) als Katalysator, 1,0 Gew.-Teilen der gegenüber Carboxylgruppen reaktiven Komponente E) sowie an Hilfs- und Zusatzmitteln F) 0,5 Gew.-Teilen Tetrabutylammoniumbromid (Sigma-Aldrich Chemie GmbH, München, DE), 3,0 Gew.-Teilen eines handelsüblichen Verlaufsmittels (Additol P 896, DSM Fine Chemicals, Sittard, NL), 0,5 Gew.-Teilen Benzoin und 35,0 Gew.-Teilen eines Weißpigmentes (Kronos® 2160, Fa. Kronos Titan, Leverkusen, DE) ein weiß pigmentierter Pulverlack hergestellt.

Das Äquivalentverhältnis von Gesamt-NCO zu OH betrug 1,7 : 1, das Äquivalentverhältnis von Carboxylgruppen zu gegenüber Carboxylgruppen reaktiven Gruppen von 1,1 : 1.

Die Gelzeit des Lacks betrug bei 180°C 65 s, bei 20 0°C 35 s.

### Beispiel 3 (erfindungsgemäß)

Nach dem in Beispiel 1 beschriebenen Verfahren wurde ausgehend von 44,0 Gew.-Teile des hydroxyfunktionellen Polyesterharzes A), 14,5 Gew.-Teilen der Uretdiongruppen aufweisenden Polyadditionsverbindung C), 1,5 Gew.-Teilen des Katalysators D1), 1,0 Gew.-Teilen der gegenüber Carboxylgruppen reaktiven Komponente E) sowie an Hilfs- und Zusatzmitteln F) 0,5 Gew.-Teilen Tetrabutylammoniumbromid (Sigma-Aldrich Chemie GmbH, München, DE), 3,0 Gew.-Teilen eines handelsüblichen Verlaufsmittels (Additol P 896, DSM Fine Chemicals, Sittard, NL), 0,5 Gew.-Teilen Benzoin und 35,0 Gew.-Teilen eines Weißpigmentes (Kronos® 2160, Fa. Kronos Titan, Leverkusen, DE) ein weiß pigmentierter Pulverlack hergestellt.

Das Äquivalentverhältnis von Gesamt-NCO zu OH betrug 1,7 : 1, das Äquivalentverhältnis von Carboxylgruppen zu gegenüber Carboxylgruppen reaktiven Gruppen von 1,1 : 1.

Die Gelzeit des Lacks betrug bei 180°C 55 s, bei 20 0°C 25 s.

### Beispiel 4 (erfindungsgemäß)

Nach dem in Beispiel 1 beschriebenen Verfahren wurde ausgehend von 44,4 Gew.-Teile des hydroxyfunktionellen Polyesterharzes A), 14,6 Gew.-Teilen der Uretdiongruppen aufweisenden Polyadditionsverbindung C), 1,0 Gew.-Teilen des Katalysators D2), 1,0 Gew.-Teilen der gegenüber Carboxylgruppen reaktiven Komponente E) sowie an Hilfs- und Zusatzmitteln F) 0,5 Gew.-Teilen Tetrabutylammoniumbromid (Sigma-Aldrich Chemie GmbH, München, DE), 3,0 Gew.-Teilen eines handelsüblichen Verlaufsmittels (Additol P 896, DSM Fine Chemicals, Sittard, NL), 0,5 Gew.-Teilen Benzoin und 35,0 Gew.-Teilen eines Weißpigmentes (Kronos® 2160, Fa. Kronos Titan, Leverkusen, DE) ein weiß pigmentierter Pulverlack hergestellt.

Das Äquivalentverhältnis von Gesamt-NCO zu OH betrug 1,7 : 1, das Äquivalentverhältnis von Carboxylgruppen zu gegenüber Carboxylgruppen reaktiven Gruppen von 1,1 : 1.

Die Gelzeit des Lacks betrug bei 180°C 25 s, bei 20 0°C 15 s.

Der Vergleich der Gelzeiten zeigt die deutlich höhere Reaktivität der erfindungsgemäßen der Pulverlacke nach Beispiel 3 und 4 gegenüber dem unkatalysierten Pulverlack aus Beispiel 1 und dem gemäß des Standes der Technik katalysierten Pulverlack aus Beispiel 2.

Die gemäß der Beispiele 1 bis 4 hergestellten Pulverlacke wurden mit einer Korona-Pistole bei einer Hochspannung von 90 KV elektrostatisch in einer Schichtdicke von 80-110 µm auf entfettete Aluminiumbleche der Fa. Chemetall aufgetragen und in einem Umluftofen jeweils 15 Minuten bei 130°C, 140°C, 150 °C und 160°C sowie jeweils 10 Minuten 160°C, 170°C, 180°C und 200°C ausgehärtet.

Anschließend wurde die Chemikalienbeständigkeit der Beschichtungen mit Hilfe des Aceton-Tests geprüft. Während der unkatalysierte Vergleichs-Pulverlack aus Beispiel 1 erst nach 10 minütigem Einbrennen bei 200°C völlig beständig gegenüber Aceton war, was einer vollständigen Aushärtung gleichzusetzen ist, zeigten der Vergleichs-Pulverlack aus Beispiel 2 sowie der erfindungsgemäße Pulverlack aus Beispiel 3 bereits nach 15 Minuten bei 140°C eine sehr gute Chemikalienbeständ igkeit. Der erfindungsgemäß mit Katalysator D2) katalysierte Pulverlack aus Beispiel 4 war sogar bereits nach 15 minütigem Einbrennen bei 130°C völlig Acetonbeständ ig und damit vollständig ausgehärtet.

## Patentansprüche

1. Polyurethan-Pulverlack, enthaltend
A) mindestens eine unterhalb von 40°C in fester und oberhalb von 130°C in flüssiger Form vorliegende hydroxyfunktionelle Bindemittelkomponente mit einer OH-Zahl von 15 bis 200 mg KOH/g, einem zahlenmittleren Molekulargewicht von 400 bis 10000 und einem Gehalt an Carboxylgruppen (berechnet als COOH; Molekulargewicht = 45) von bis zu 2,0 Gew.-%, gegebenenfalls
B) mindestens einen Monoalkohol oder mindestens ein Monoalkoholgemisch, das unterhalb von 23°C in fester und oberhalb von 1 25°C in flüssiger Form vorliegt,
C) mindestens eine Uretdiongruppen und gegebenenfalls freie Isocyanatgruppen aufweisende Polyadditionsverbindung auf Basis aliphatischer und/oder cycloaliphatischer Diisocyanate,
D) mindestens einen Katalysator, enthaltend ein Strukturelement der allgemeinen Formeln (I) und/oder (II) 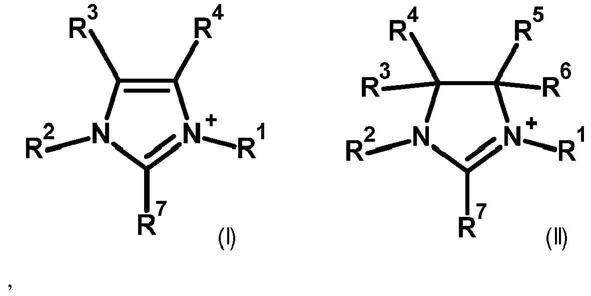 in welchen
R¹, R², R³, R⁴, R⁵ und R⁶ unabhängig voneinander für gleiche oder verschiedene Reste stehen, die gesättigte oder ungesättigte, lineare oder verzweigte, aliphatische, cycloaliphatische, araliphatische oder aromatische organische Reste mit 1 bis 18 Kohlenstoffatomen bedeuten, die substituiert oder unsubstituiert sind und/oder Heteroatome in der Kette aufweisen, wobei die Reste auch in Kombination untereinander gegebenenfalls gemeinsam mit einem weiteren Heteroatom Ringe mit 3 bis 8 Kohlenstoffatomen bilden können, die gegebenenfalls weiter substituiert sein können, wobei
R³, R⁴, R⁵ und R⁶ unabhängig voneinander auch für Wasserstoff stehen können, und
R⁷ für Wasserstoff oder ein Carboxylat-Anion (COO⁻) steht,
gegebenenfalls
E) mindestens eine gegenüber Carboxylgruppen reaktive Gruppen aufweisende Komponente eines zahlenmittleren Molekulargewichtes von 200 bis 5000,
und gegebenenfalls
F) weitere aus der Pulverlacktechnologie bekannte Hilfs- und Zusatzstoffe,
mit der Maßgabe, dass die Komponenten A), B) und C) in solchen Mengenverhältnissen vorliegen, dass auf jede Hydroxylgruppe der Komponenten A) und B) 0,8 bis 4,0 Isocyanatgruppen der Komponente C) entfallen, wobei unter Isocyanatgruppen der Komponente C) die Summe aus in dimerer Form als Uretdiongruppen vorliegenden Isocyanatgruppen und freien Isocyanatgruppen verstanden wird, die Komponenten A) und gegebenenfalls E) in solchen Mengenverhältnissen vorliegen, dass auf jede Carboxylgruppe der Komponente A) 0,8 bis 2,0 gegenüber Carboxylgruppen reaktive Gruppen der Komponente E) entfallen, der Anteil der Komponente B) an der Gesamtmenge der Komponenten A) bis F) gegebenenfalls bis 10 Gew.-% und der Anteil der Komponente D) an der Gesamtmenge der Komponenten A) bis F) 0,05 bis 5 Gew.-% beträgt.

2. Pulverlack gemäß Anspruch 1, **dadurch gekennzeichnet, dass** die Komponente A) mindestens einen Hydroxylgruppen aufweisenden Polyester mit einer OH-Zahl von 25 bis 200 und einem zahlenmittleren Molekulargewicht von 1000 bis 5000 enthält und bevorzugt daraus besteht.

3. Pulverlack gemäß Anspruch 1 oder 2, **dadurch gekennzeichnet, dass** die Komponente A) mindestens einen Hydroxylgruppen aufweisenden Polyester enthält, der eine Erweichungstemperatur (Tg) innerhalb des Temperaturbereiches von 40 bis 120°C aufweist und/oder semikristallin mit einem Schmelzpunkt im Bereich von 40 bis 130°C ist.

4. Pulverlack gemäß einem der Ansprüche 1 bis 3, **dadurch gekennzeichnet, dass** die Komponente C) mindestens eine Uretdiongruppen und gegebenenfalls freie Isocyanatgruppen aufweisende Polyadditionsverbindung auf Basis von 1,5-Pentamethylendiisocyanat (PDI), 1,6-Hexamethylendiisocyanat (HDI), 1-Isocyanato-3,3,5-trimethyl-5-isocyanatomethylcyclohexan (Isophorondiisocyanat, IPDI), 4,4'- und/oder 4,2'-Diisocyanatodicyclohexylmethan (H₁₂-MDI) oder beliebiger Gemische dieser Diisocyanate enthält oder daraus besteht.

5. Pulverlack gemäß einem der Ansprüche 1 bis 4, **dadurch gekennzeichnet, dass** die Komponente C) mindestens eine Uretdiongruppen und gegebenenfalls freie Isocyanatgruppen aufweisende Polyadditionsverbindung mit einem Mindestgehalt an Carbonsäureestergruppen (berechnet als CO₂; Molekulargewicht = 44) und/oder Carbonatgruppen (berechnet als CO₃; Molekulargewicht = 60) von 1 Gew.-% enthält oder daraus besteht.

6. Pulverlack gemäß einem der Ansprüche 1 bis 5, **dadurch gekennzeichnet, dass** als Aushärtekatalysator D) salzartige Verbindungen, enthaltend ein Strukturelement der allgemeinen Formeln (I) oder (II) eingesetzt werden, in welchen
R¹ und R² unabhängig voneinander für gleiche oder verschiedene Reste stehen, die gesättigte oder ungesättigte, lineare oder verzweigte, aliphatische, cycloaliphatische, araliphatische oder aromatische organische Reste mit 1 bis 12 Kohlenstoffatomen bedeuten, die substituiert oder unsubstituiert sind und/oder Heteroatome in der Kette aufweisen,
R³, R⁴, R⁵ und R⁶ für Wasserstoff stehen, und wobei
R⁷ für Wasserstoff oder ein Carboxylat-Anion (COO⁻) steht.

7. Pulverlack gemäß einem der Ansprüche 1 bis 6, **dadurch gekennzeichnet, dass** als Aushärtekatalysator D) salzartige Verbindungen, enthaltend ein Strukturelement der allgemeinen Formeln (I) oder (II) eingesetzt werden, in welchen
R¹ und R² unabhängig voneinander für gleiche oder verschiedene Reste stehen, die gesättigte oder ungesättigte, lineare oder verzweigte, aliphatische organische Reste mit 1 bis 12 Kohlenstoffatomen bedeuten,
R³, R⁴, R⁵ und R⁶ für Wasserstoff stehen, und
R⁷ für Wasserstoff oder ein Carboxylat-Anion (COO⁻) steht.

8. Pulverlack gemäß einem der Ansprüche 1 bis 7, **dadurch gekennzeichnet, dass** als Aushärtekatalysator D) 1,3-Dimethylimidazolium-2-carboxylat, 1-Ethyl-3-methylimidazolium-2-carboxylat, 1-Ethyl-3-methylimidazoliumacetat, 1-Butyl-3-methylimidazolium-2-carboxylat und/oder 1-Butyl-3-methylimidazoliumacetat eingesetzt wird.

9. Pulverlack gemäß einem der Ansprüche 1 bis 8, **dadurch gekennzeichnet, dass** als Komponente E) Polyepoxide und/oder β-Hydroxyalkylamide verwendet werden.

10. Pulverlack gemäß einem der Ansprüche 1 bis 9, **dadurch gekennzeichnet, dass** als Komponente E) Gemische von 70 bis 82 Gew.-% Terephthalsäurediglycidylester und 18 bis 30 Gew.-% Trimellitsäuretriglycidylester verwendet werden.

11. Pulverlack gemäß einem der Ansprüche 1 bis 10, **dadurch gekennzeichnet, dass** als Komponente F) Tetraalkylammonium- und/oder Tetraalkylphosphoniumsalze eingesetzt werden.

12. Pulverlack gemäß einem der Ansprüche 1 bis 11, **dadurch gekennzeichnet, dass** die Komponenten A), B) und C) in solchen Mengenverhältnissen vorliegen, dass auf jede Hydroxylgruppe der Komponenten A) und B) 1,0 bis 3,0 Isocyanatgruppen der Komponente C) entfallen, wobei unter Isocyanatgruppen der Komponente C) die Summe aus in dimerer Form als Uretdiongruppen vorliegenden Isocyanatgruppen und freien Isocyanatgruppen verstanden wird, die Komponenten A) und gegebenenfalls E) in solchen Mengenverhältnissen vorliegen, dass auf jede Carboxylgruppe der Komponente A) 1,0 bis 1,5 gegenüber Carboxylgruppen reaktive Gruppe der Komponente E) entfallen, der Anteil der Komponente B) an der Gesamtmenge der Komponenten A) und B) gegebenenfalls 0,1 bis 7 Gew.-% und der Anteil der Komponente D) an der Gesamtmenge der Komponenten A) bis E) 0,1 bis 3 Gew.-% beträgt.

13. Verwendung der Pulverlacke gemäß einem der Ansprüche 1 bis 12 zur Beschichtung von Substraten.

14. Verfahren zur Herstellung einer Beschichtung, **dadurch gekennzeichnet, dass** ein Pulverlack gemäß einem der Ansprüche 1 bis 12 durch elektrostatisches Pulversprühen oder Wirbelsintern auf ein Substrat aufgebracht und durch Erhitzen auf Temperaturen von 100 bis 220°C ausgehärtet wird .

15. Substrate, beschichtet mit Polymerfilmen erhältlich aus Pulverlacken gemäß eine der Ansprüche 1 bis 12.
